# EUROPEAN PATENT APPLICATION

(11) **EP 4 803 394 A1**
(43) Date of publication of application: **09.09.2026**
(21) Application number: 26163010.7
(22) Date of filing: 06.03.2026
(51) Int. Cl.: B60W 30/18, B60W 50/08

(54) **CONTROL SYSTEM, VEHICLE AND CONTROL METHOD FOR SOFT SURFACE RECOVERY**

(30) Priority: 07.03.2025 GB 202503387
(71) Applicant: Jaguar Land Rover Limited, Coventry, Warwickshire CV3 4LF (GB)
(72) Inventor: Canning, Jonathan, Coventry, CV3 4LF (GB); Furby, Rowena, Coventry, CV3 4LF (GB); Javed, Usmaan, Coventry, CV3 4LF (GB); Coleman, James, Coventry, CV3 4LF (GB); Sava, Vasile, Coventry, CV3 4LF (GB); Johnson, Christopher, Coventry, CV3 4LF (GB)
(74) Representative: Jaguar Land Rover Patents Department

(57) **Abstract**

The invention relates to a recovery control system (300) for controlling one or more elements (340) of a vehicle (100), the recovery control system comprising one or more processors collectively configured to: receive a recovery request signal (202) indicative of a request to recover the vehicle from a stuck state, wherein, in the stuck state, the vehicle has an actual body-over-ground speed lower than an expected body-over ground-speed, receive one or more inputs (204) indicative of one or more environment factors at the location of the vehicle; in dependence on the recovery request signal and the one or more inputs, determine one or more operation parameters to control the one or more elements to operate in a recovery mode to cause recovery of the vehicle from the stuck state; and output the one or more operation parameters (206) to the one or more elements to cause the one or more elements to automatically operate in the recovery mode. The invention further relates to a corresponding vehicle and method.

## Description

### TECHNICAL FIELD

The present disclosure relates to a recovery control system for a vehicle. Aspects of the invention relate to recovery control system, a system, a vehicle, a method, and computer readable instructions and a computer program product.

### BACKGROUND

Some terrains are more challenging to drive over than others. It is known to provide driving assistance features in a vehicle to assist the driver in controlling the vehicle.

However, it can be a challenge, especially for less experienced drivers, to free a vehicle in a situation where it has become stuck on terrain such as mud, snow, or sand.

It is an aim of the present invention to address one or more of the disadvantages associated with the prior art.

### SUMMARY OF THE INVENTION

Aspects and embodiments of the invention provide a recovery control system, a vehicle, and a method, as claimed in the appended claims.

According to an aspect of the present invention there is provided a recovery control system for controlling one or more elements of a vehicle, the recovery control system comprising one or more processors collectively configured to: receive a recovery request signal indicative of a request to recover the vehicle from a stuck state; in dependence on the recovery request signal, determine one or more operation parameters to control the one or more elements to operate in a recovery mode to cause recovery of the vehicle from the stuck state; and output the one or more operation parameters to the one or more elements to cause the one or more elements to automatically operate in the recovery mode. In this way, the recovery control system can control the element(s) of the vehicle to recover it from a stuck state on receipt of a recovery request signal.

According to an aspect of the present invention there is provided a recovery control system for controlling one or more elements of a vehicle, the recovery control system comprising one or more processors collectively configured to: receive a recovery request signal indicative of a request to recover the vehicle from a stuck state, wherein, in the stuck state, the vehicle has an actual body-over-ground speed lower than an expected body-over ground-speed; receive one or more inputs indicative of one or more environment factors at the location of the vehicle; in dependence on the recovery request signal and the one or more inputs, determine one or more operation parameters to control the one or more elements to operate in a recovery mode to cause recovery of the vehicle from the stuck state; and output the one or more operation parameters to the one or more elements to cause the one or more elements to automatically operate in the recovery mode. The "elements" of the vehicle which may be controlled by the recovery control system may be called "recovery elements" or "elements of a recovery mechanism" of the vehicle. At least one of the one or more elements may serve a purpose other than recovery of the vehicle.

Advantageously, if a vehicle is stuck (for example, in mud or sand), then the recovery control system of the vehicle can control one or more elements of the vehicle, for example the wheels and/or suspension, according to predetermined operation parameters to recover the vehicle so it is not stuck any longer. The operation parameters are obtained according to the environment in which the vehicle is stuck. For example, it may be beneficial to operate the wheels in a certain way to recover the vehicle from being stuck in wet sand, and may be beneficial to operate the wheels and suspension in a different certain way to recover the vehicle from mud. The present invention provides for a predetermined strategy to be implemented to recover the vehicle without the driver needing experience in recovering the vehicle from the environment in which it is stuck. The predetermined parameters may be determined, at least in part, according to experience of other drivers. Consequently, the recovery control system may be thought of as a "virtual expert" providing contextually relevant control of the vehicle for the given stuck state in a similar manner to an expert driver operating the vehicle to release it.

In the stuck state, the actual body-over-ground speed may be substantially zero. The expected body-over-ground speed may be determined according to a wheel rotation speed of the vehicle. The expected body-over-ground speed may be determined according to position of an accelerator pedal of the vehicle.

The control system may comprise one or more controllers collectively comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon so as to: receive a recovery request signal indicative of a request to recover the vehicle from a stuck state, wherein, in the stuck state, the vehicle has an actual body-over-ground speed lower than an expected body-over ground-speed; receive one or more inputs indicative of one or more environment factors at the location of the vehicle; in dependence on the recovery request signal and the one or more inputs, determine one or more operation parameters to control the one or more elements to operate in a recovery mode to cause recovery of the vehicle from the stuck state; and output the one or more operation parameters to the one or more elements to cause the one or more elements to automatically operate in the recovery mode.

The recovery control system may further comprise a predetermined parameter storage means (e.g. a memory storage device such as a hard disk drive, or storage in the cloud) comprising the one or more operation parameters, wherein the one or more processors are collectively configured to determine the one or more operation parameters using the predetermined parameter storage means. The predetermined parameter storage means may comprise one or more inputs mapped to the one or more operation parameters in a mapping relationship, wherein the one or more processors are collectively configured to determine the one or more operation parameters using the mapping relationship. Advantageously, the operation parameters to be used to control a vehicle are prestored and may be retrieved depending on the environment in which the vehicle is stuck. In this way the vehicle may benefit from prestored "expert" control to retrieve/free the vehicle.

The one or more operation parameters may be configured to control the one or more elements to modify one or more of: a position of the vehicle in a direction substantially aligned with a longitudinal axis of the vehicle; a lateral position of the vehicle to move the vehicle perpendicular to a direction of orientation of the front of the vehicle; and a vertical position of the vehicle relative to a level of the ground on which the vehicle is located. Advantageously, the vehicle movement may be controlled in different directions (e.g. in the x, y, and/or z directions in Cartesian coordinates) to recover the vehicle from the stuck state.

The one or more operation parameters may comprise one or more of: a wheel rotation speed to cause wheels of the vehicle to rotate at the wheel rotation speed; a wheel rotation acceleration to cause wheels of the vehicle to rotate at the wheel rotation acceleration; a wheel rotation direction to cause wheels of the vehicle to rotate in the wheel rotation direction; a suspension system height to cause a suspension system of the vehicle to operate at the suspension system height; a wheel steering direction to cause wheels of the vehicle to be oriented in the wheel steering direction; and a rate of change of wheel steering direction to cause wheels of the vehicle to change orientation at the rate of change of wheel steering direction. Advantageously, the one or more elements of the vehicle which can be controlled in the recovery mode may comprise one or more wheels and/or a variable height suspension system of the vehicle, and these may be controlled according to the environment in which the vehicle is stuck to appropriately allow for recovery of the vehicle from the stuck state. Operating the one or more elements in different ways may be appropriate depending on the particular environment in which the vehicle is stuck.

The one or more elements may comprise one or more of: a wheel rotation control mechanism configured to control a wheel rotation direction; a wheel steering direction control mechanism configured to control a wheel steering direction; and a suspension height control mechanism configured to control a suspension height of a suspension system of the vehicle. Advantageously, one or more elements of the vehicle which control its movement may be controlled in different ways (e.g. in the x, y, and/or z directions) to recover the vehicle from the stuck state.

The operation parameters, when output to a wheel rotation control mechanism of the vehicle, may cause one or more wheels controlled by the wheel rotation control mechanism to repeatedly vary wheel rotation direction between a forward direction and a reverse direction. The operation parameters, when output to a wheel steering direction control mechanism of the vehicle, may cause one or more wheels controlled by the wheel steering direction control mechanism to repeatedly vary wheel steering direction between a first turning direction and a second turning direction. The operation parameters, when output to a suspension height control mechanism of the vehicle, may cause the suspension height control mechanism to repeatedly vary suspension height between a first suspension height and a second suspension height. Advantageously, elements of the vehicle which control its movement may be controlled in different ways to recover the vehicle from the stuck state. Advantageously, the vehicle may be recovered from the stuck state by rotating the wheels back and forth, oscillating the direction in which the wheels are facing, and/or moving the variable suspension up and down to bounce the vehicle, in a predetermined way which is a recommended way to recover the vehicle from the particular environment in which it is stuck. This may be particularly advantageous when the vehicle is stuck in dry sand.

The recovery request signal may be received in response to receipt of a recovery request user input made by a user. The recovery request signal may be received based on data received from one or more sensors, the data indicative of the vehicle being in the stuck state. Advantageously, the user may provide input to indicate that the vehicle in which they are driving is stuck, and/or one or more sensors of the vehicle may detect and indicate that the vehicle is stuck. Such sensors may comprise one or more of a global positioning system (GPS) sensor, wheel rotation torque sensor, wheel direction torque sensor, body height from ground sensor, and/or a wheel rotation speed versus body over ground speed sensor.

The recovery request signal may be received in response to a determination that the brake pedal of the vehicle has been pressed and released. Advantageously, the user can easily indicate that there is a problem with the vehicle being in a stuck state and recovery is desired by operating the brake pedal in a particular way. This input may be provided in combination with one or more other inputs as discussed herein.

The one or more inputs may be received in response to an environment user input made by a user and indicative of the environment factors. The one or more inputs may be received from one or more sensors configured to collect data indicative of the environment factors. Advantageously, the user may provide input to indicate the environment in which the vehicle is stuck, and/or one or more sensors of the vehicle may sense the environment. For example, such sensor may comprise one or more of: an imaging device, such as a camera (e.g. configured to image the ground and/or a wheel surface), a temperature sensor, a humidity sensor, a wind speed sensor, and/or a torque sensor.

The one or more environment factors may comprise: a ground material/terrain type, a ground roughness, a ground slope, a ground humidity level, a ground temperature, an air temperature, an air humidity level, a wind speed, and a wind direction. Advantageously, the environment may be determined in various ways for use in determining the best way of recovering the vehicle from the stuck state in that environment. The ground material/terrain type may comprise one or more of: sand, mud, gravel, snow, ice, dirt, grass, moss, and/or water.

The one or more inputs may indicate a confirmation that the area in which the vehicle is located is appropriate to be recovered from by the recovery control system (e.g. the vehicle is not sinking, is not seriously damaged, or in an otherwise hazardous environment). Advantageously, the recovery process may not begin, or may be halted, if the environment is not an appropriate one to be recovered from, or if the recovery control system determines that automatic recovery is not possible (for example because the wheels are mostly or completely submerged in mud or sand, or because sensor data is provided to the recovery control system to indicate there is a fault with the vehicle such as a sheared axle).

The one or more inputs may indicate a confirmation of a terrain type in which the vehicle is stuck (such as wet sand, dry sand, mud, ice, snow, etc.). The recovery process may be performed in accordance with an indication of the terrain so that a suitable recovery process can be performed, if possible for that terrain.

The one or more inputs may indicate a confirmation that a determined vehicle recovery direction is appropriate; that is, there is space into which the vehicle can move (e.g. if the vehicle were to move forwards it would not meet an obstacle or sudden drop in ground level). Advantageously, the recovery process may not move the vehicle in an unsuitable direction (e.g. towards a large drop in ground level).

The recovery control system may be configured to: determine the one or more operation parameters in dependence on one or more of: the pitch of the vehicle, the roll of the vehicle, and the yaw of the vehicle, to control the one or more elements to operate in the recovery mode to cause recovery of the vehicle from the stuck state in a recommended recovery direction; and output the one or more operation parameters to the one or more elements to cause the one or more elements to automatically operate in the recovery mode to recover the vehicle in the recommended recovery direction. That is, the orientation of the vehicle can be provided to the recovery control system which can take account of that orientation in determining how to control the operation of the one or more elements to recover the vehicle. For example, if the vehicle is facing downhill, the recovery process may account for the effect of gravity acting to pull the vehicle down the hill, and may aim to make use of the gravitational force in recovering the vehicle (e.g. by causing the vehicle to move in the direction of the pull of gravity). If the vehicle is determined to be lower on the left side than on the right side (or vice versa), this may be accounted for in controlling the speed of wheel rotation during recovery. Other examples may be envisaged.

The recovery control system may be configured to output the recommended recovery direction to a user; and receive a user confirmation input in response to the output recommended recovery direction confirming the recovery control system is to recover the vehicle in the recommended recovery direction, before outputting the one or more operation parameters to the one or more elements. Advantageously, the user is informed of the planned recovery process and can provide their confirmation to go ahead with recovery.

This may instil increased confidence in the user that the recovery process is appropriate and possible, and set the user's expectations as to what the vehicle will aim to do when performing the recovery process.

The recovery control system may be configured to: receive drive request signalling indicative of a user-indicated desired driving movement of the vehicle; and determine the recommended recovery direction in dependence on the user-indicated desired driving movement of the vehicle. Advantageously, the user may provide input to indicate a direction in which the vehicle should be propelled during recovery so the user has some control over the recovery process though the user need not be concerned with how the elements are controlled during recovery. For example, the user may determine they wish to move forwards onto dryer flat ground rather than backwards onto muddy ground, and to indicate to the recovery control system that the vehicle should be recovered in a forward direction.

The recovery control system may be configured to, in response to receipt of the recovery request signal, prompt the user to input, via a user input device, the one or more inputs indicative of the one or more environment factors at the location of the vehicle. Advantageously, the recovery control system can output queries, or prompts, to the user of the vehicle, and obtain an indication of the environment from the user's response, and/or obtain an indication of how the user would like the vehicle to be moved (e.g. move forward, move backward, bear left) based on the user's response. This may help the user feel in control and have confidence in the operation of the vehicle.

The recovery control system may be configured to determine the one or more operation parameters of the one or more elements further in dependence on the drive request signal. Advantageously, the recovery control system can determine the operation parameters according to how the user indicates they wish the vehicle to be operated.

The recovery control system may be configured to determine the one or more operation parameters of the one or more elements by retrieving the one or more operation parameters from the predetermined parameter storage means in dependence on the drive request signal. Advantageously, the pre-stored operation parameters can be retrieved according to how the user indicates they wish the vehicle to be operated.

The recovery control system may be configured to output an indication of the operation of the one or more elements for a user of the vehicle. The indication of the operation of the one or more elements may be provided during the recovery of the vehicle from the stuck state. That is, a recovery progress status indication may be provided as feedback to the user to indicate how the recovery process is progressing, to keep the user informed and give the user confidence in the operations which the vehicle is performing.

The recovery control system may be configured to: receive feedback data from one or more sensors during operation of the one or more elements in the recovery mode; determine a recovery state of the vehicle based on the feedback data; determine one or more updated operation parameters in dependence on the recovery state; and output the one or more updated operation parameters to the one or more elements to cause the one or more elements to operate in an updated recovery mode. The feedback signalling may be indicative of one or more of: a change in body-over-ground speed, a change in wheel torque, a change of GPS location, a change in body height from ground, a change in wheel rotation speed, a change in a ratio of wheel rotation speed to body over ground speed. Advantageously, as the vehicle is undergoing recovery according to the operation parameters, feedback signal is provided to the recovery control system and the operation parameters can be updated according to how recovery is progressing. For example, if the initial operation parameters used are to recover the vehicle from being stuck in mud of 8cm depth, and during recovery the vehicle moves to being stuck in mud of 3cm depth, the operation parameters to recover the vehicle from the shallower mud depth may be retrieved and used to adapt the recovery process according to the progress of the recovery.

The recovery control system may be configured to: receive recovery signal indicative of recovery of the vehicle from the stuck state; and in response to receipt of the recovery signal, transmit a recovery mode cancellation signal to stop the one or more elements operating in the recovery mode. Advantageously, when it is determined that the vehicle has been recovered from the stuck state, the recovery mode is cancelled and the vehicle can be controlled as usual as it is no longer stuck. The recovery signal may be indicative of the vehicle having an actual body-over-ground speed matching an expected body-over ground-speed for example. The expected body-over-ground speed may be determined according to a wheel rotation speed of the vehicle, for example; and the actual body-over-ground speed may be determined according to a vehicle location sensor such as GPS, for example. Advantageously, the determination of recovery from the stuck state can be determined based on the body over ground speed of the vehicle being as expected for the rotation speed of the wheels of the vehicle.

The recovery mode cancellation signal may cause the one or more elements to revert to operating in the same way as immediately before operation of the one or more elements in the recovery mode. Advantageously, following recovery, the vehicle may be operated as it was prior to getting stuck.

The recovery control system may be configured to: output the one or more operation parameters to control the one or more elements in dependence on a determination that the vehicle meets one or more recovery conditions, the one or more recovery conditions comprising: a slope angle of the vehicle being within a recoverable slope angle range; a determination that the vehicle is not towing a trailer; the vehicle having brakes released; and a determination that the vehicle is not grounded out. Advantageously, a further check can be performed prior to outputting the operation parameters to cause recovery of the vehicle to help ensure the vehicle is in an appropriate situation for auto recovery.

A slope angle may be one or more of a roll angle, a pitch angle, and a yaw angle. A trailer may be any towable entity e.g. a caravan, trailer, horse box, boat trailer. A vehicle which is "grounded out", which may be called being "bellied out", may be understood to mean a part of the underside of the vehicle is wedged on an upwards protruding rock, hill or other protrusion or obstacle, preventing at least one of the wheels of the vehicle from contacting the ground.

In an aspect of the present invention, there is provided a system comprising any recovery control system as disclosed herein, and the one or more elements of the vehicle. Advantageously, the recovery control system may be provided as part of a system including the elements used to effect recovery of the vehicle. The one or more elements may comprise one or more of: a wheel rotation subsystem; a wheel direction subsystem; and a suspension height subsystem.

In an aspect of the present invention, there is provided a vehicle comprising any system disclosed herein or any recovery control system disclosed herein.

In an aspect of the present invention, there is provided a method for controlling one or more elements of a vehicle, the method comprising: receiving a recovery request signal indicative of a request to recover the vehicle from a stuck state, wherein, in the stuck state, the vehicle has an actual body-over-ground speed lower than an expected body-over ground-speed; receiving one or more inputs indicative of one or more environment factors at the location of the vehicle; in dependence on the recovery request signal and the one or more inputs, determining one or more operation parameters of the one or more elements, the one or more operation parameters configured to control one or more elements to operate in a recovery mode to cause recovery of the vehicle from the stuck state; and outputting the one or more operation parameters to the one or more elements to cause the one or more elements to operate in the recovery mode.

In an aspect of the present invention, there are provided computer readable instructions which, when executed by one or more processors, cause the one or more processors to perform any method disclosed herein. The method may comprise receiving the recovery request in response to the brake pedal of the vehicle having been pressed and released.

In an aspect of the present invention, there is a computer readable medium comprising computer readable instructions that, when executed by one or more processors, cause the one or more processors to perform any of the methods described herein. The computer readable medium may be a non-transitory computer readable medium.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a vehicle in accordance with an embodiment of the invention;
Figure 2 shows a method in accordance with an embodiment of the invention;
Figure 3 shows a recovery control system in accordance with an embodiment of the invention;
Figure 4 shows a recovery control system in accordance with an embodiment of the invention;
Figure 5 shows an example definition of directions and angular rotation planes in accordance with an embodiment of the invention;
Figure 6 shows a recovery control system and an example of plural inputs, plural operational parameters and plural elements of the vehicle in accordance with an embodiment of the invention;
Figure 7 shows an example of a recovery control system exiting a recovery mode in accordance with an embodiment of the invention; and
Figures 8A and 8B show an example input device and example output device in accordance with embodiments of the invention.

### DETAILED DESCRIPTION

It is a challenge, when driving on difficult terrain, to control the movement of the vehicle as desired, even with known driving assistance features enabled. In particular, if a vehicle becomes stuck on a terrain such as mud, snow, or sand, it can be challenging to free the vehicle to continue driving. It may be the case that less experienced drivers are unable to free their vehicle from being stuck; for example they may not have the driving skills or experience needed to control the vehicle to free itself.

Examples disclosed herein aim to solve this problem in the art and provide control of a vehicle to recover itself when it has become stuck. It should be understood in the context of this disclosure that being "stuck" means that the vehicle is stuck because of the terrain it is on and the nature of the terrain, and that the vehicle, if located on different terrain on which it would not become stuck (such as a flat tarmac road), would not be stuck and could drive as expected. The terrain may comprise sand (wet sand and/or dry sand), mud, gravel, snow, ice, dirt, grass, moss, and/or water, for example. Being stuck is not intended to mean that the vehicle has suffered a breakdown and is unable to travel regardless of the terrain it is located in. In the stuck state, the actual body-over-ground speed of the vehicle may be substantially zero in some examples.

The "self-recovery" of the vehicle enabled by the recovery control systems disclosed herein may enable for the vehicle to be freed from a stuck state without the need for the driver or other passengers to exit the vehicle. The recovery control systems disclosed herein, by way of retrieving operation parameters for one or more elements of the vehicle and controlling those elements according to the operation parameters and in accordance with the environment in which the vehicle is stuck, may allow for vehicles to be automatically recovered from being in the stuck state in a suitable manner, for example in a similar way to which an expert driver may control the vehicle elements, without the user having such expert knowledge. Advantageously, the recovery control system may control elements of the vehicle which are already present in the vehicle, to effect recovery of the vehicle from a stuck state; that is, no additional mechanical elements need to be included in the vehicle for the recovery of the vehicle to be controlled by the recovery control systems disclosed herein.

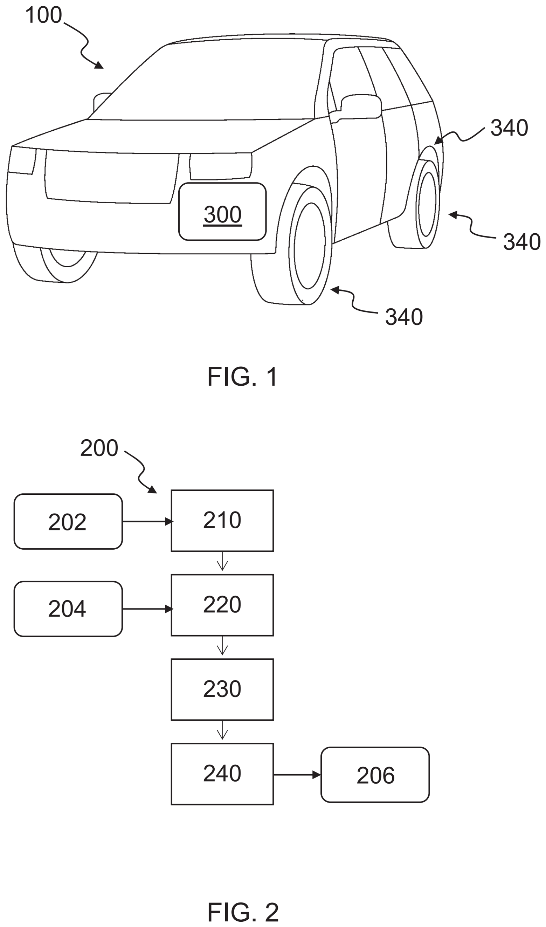

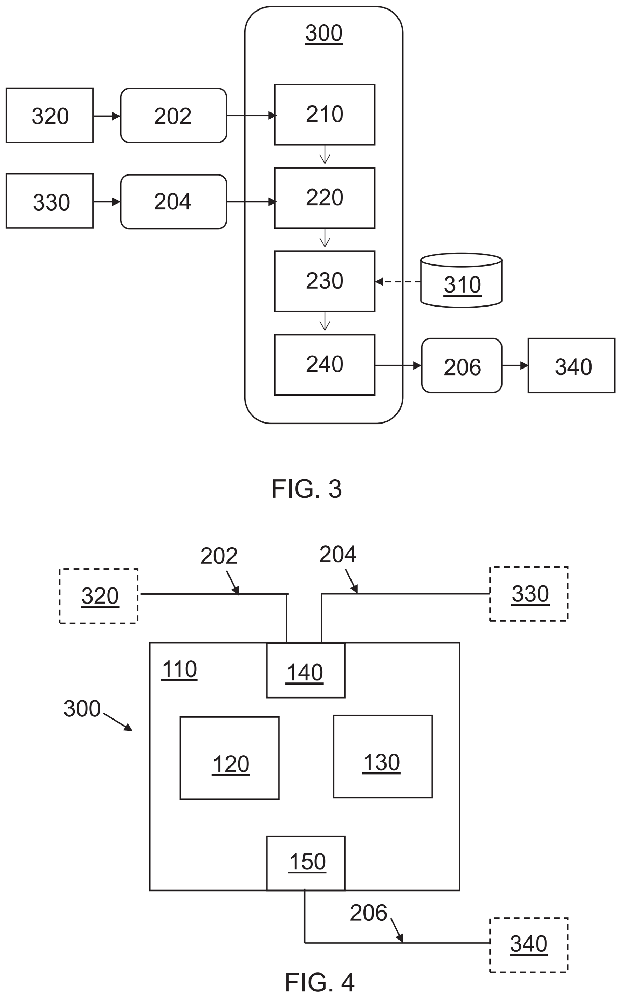

Figure 1 illustrates a vehicle 100 according to an embodiment of the present invention. The vehicle 100 comprises a recovery control system 300 as illustrated in Figure 3. The vehicle 100 may comprise systems as disclosed herein (such as a system comprising a recovery control system 300 and one or more elements 340, such as wheels and wheel movement control systems, and/or a controllable suspension system). The vehicle 100 may be a so-called "off-road" vehicle which can be used for driving on off-road terrain. The vehicle may be any vehicle which may potentially enter a stuck state.

Figure 2 illustrates a method 200 according to an embodiment of the invention. Details of the steps of the method 200 are described in relation to Figures 3 to 8. The method 200 is a method of controlling one or more elements 340 of a vehicle 100, such as the vehicle 100 illustrated in Figure 1. The method 200 comprises receiving 210 a recovery request signal 202 indicative of a request to recover the vehicle from a stuck state. In the stuck state, the vehicle has an actual body-over-ground speed lower than an expected body-over ground-speed. The expected body-over-ground speed may be determined according to a wheel rotation speed of the vehicle in some examples, e.g. a wheel rotation speed of 300 revolutions per minute (rpm) may be expected to move the vehicle along at 40 km per hour (kph). The expected body-over-ground speed may be determined according to position of an accelerator pedal of the vehicle in some examples, that is, a given accelerator pedal position (e.g. 80% depressed) may be correlated to an expected vehicle movement speed (e.g. 70kph). Other ways of determining an expected vehicle body-over-ground speed from a position or movement of one or more components of the vehicle may be envisaged.

The method 200 comprises receiving 220 one or more inputs 204 indicative of one or more environment factors at the location of the vehicle. The environmental factors may be input by user input (e.g. in response to a prompt to do so), and/or through data reported by one or more sensors of the vehicle, such as cameras, LIDAR, pressure sensors, temperature sensors, light sensors, or other sensors able to transmit information indicative of the vehicle environment.

The method 200 comprises, in dependence on the recovery request signal 202 and the one or more inputs 204, determining at step 230, one or more operation parameters 206 of the one or more elements 340. The one or more operation parameters 206 are configured to control one or more elements 340 to operate in a recovery mode to cause recovery of the vehicle 100 from the stuck state. The method 200 comprises outputting at step 240, the one or more operation parameters 206 to the one or more elements 340 to cause the one or more elements 340 to operate in the recovery mode. In some examples the method 200 may comprise receiving the recovery request signal 202 in response to the brake pedal of the vehicle 100 having been pressed and released.

The method 200 may be carried out by computer readable instructions which, when executed by one or more processors, cause the one or more processors to perform the method 200 (and/or any method disclosed herein). This disclosure includes a computer readable medium (e.g. memory 130 discussed in relation to Figure 4) comprising computer readable instructions that, when executed by one or more processors (e.g. processor 120 discussed in relation to Figure 4), cause the one or more processors 120 to perform the method 200 and/or any methods described herein. The computer readable medium may be a non-transitory computer readable medium.

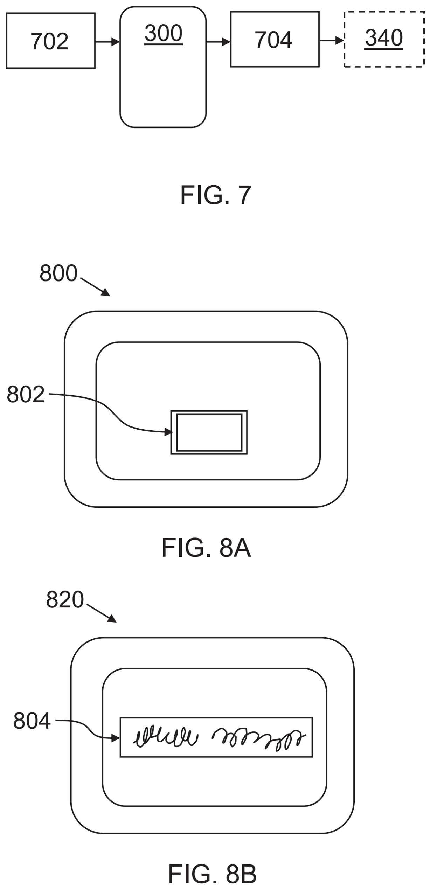

Figure 3 illustrates a recovery control system 300 for controlling one or more elements 340 of a vehicle 100 and can perform methods such as the method described with reference to Figure 2. The recovery control system 300 is configured to receive a recovery request signal 202 indicative of a request to recover the vehicle 100 from a stuck state. The recovery request signal 202 may be received from a user input device 320 (see for example Figure 8A) by way of a recovery request user input made using the user input device 320. The recovery request signal 202 may be received from one or more sensors 320 by way of data transmitted from the one or more sensors 320 and indicative of the vehicle being in the stuck state. Advantageously, the user may provide input to indicate that the vehicle in which they are driving is stuck, and/or one or more sensors of the vehicle may detect and indicate that the vehicle is stuck. Such sensors may comprise one or more of a global positioning system (GPS) sensor, wheel rotation torque sensor, wheel direction torque sensor, body height from ground sensor, and/or a wheel rotation speed versus body over ground speed sensor. The recovery request signal 202 may be received in response to a determination that the brake pedal of the vehicle has been pressed and released in some example (this example may be considered to be a type of user input). Advantageously the user can easily indicate that there is a problem with the vehicle being in a stuck state and recovery is desired by operating the brake pedal in a particular way.

The recovery control system 300 is configured to receive one or more inputs 204 indicative of one or more environment factors at the location of the vehicle. The one or more inputs 204 may be received from a user input device 330 (see for example Figure 8A) by way of an environment user input made by a user and indicative of the environment factors. For example, the user may enter data to indicate the environment which the vehicle is in. The one or more inputs 204 may be received from one or more sensors 330 configured to collect data indicative of the environment factors. An environment sensor 330 may comprise one or more of: an imaging device, such as a camera (e.g. configured to image the ground and/or a wheel surface), a temperature sensor, a humidity sensor, a wind speed sensor, and/or a torque sensor, for example. For example, a camera (visual sensor) may provide images of the area surrounding the vehicle indicative of the terrain. As another example, a rain/moisture sensor may provide data indicative of any rainfall or similar at the vehicle. The one or more environment factors may comprise: a ground material/terrain type, a ground roughness, a ground slope, a ground humidity level, a ground temperature, an air temperature, an air humidity level, a wind speed, and a wind direction. The environment may thus be determined in various ways. Advantageously, the user may provide input to indicate the environment in which the vehicle is stuck, and/or one or more sensors of the vehicle may sense the environment, to inform the selection of parameter(s) to control the element(s) of the vehicle and perform a recovery procedure.

The recovery control system 300 is configured to determine one or more operation parameters 206 to control the one or more elements 340 to operate in a recovery mode to cause recovery of the vehicle 100 from the stuck state, in dependence on the recovery request signal 202 and the one or more inputs 204. The operation parameters may be prestored values obtained through testing, "expert" driver suggestions, computer modelling results, and/or other means, and when used to control the vehicle element(s), cause the element(s) to be controlled to release the vehicle from the stuck state in a way which has been previously determined, for the same or similar conditions, to be an effective way of releasing the vehicle from being stuck.

The recovery control system 300 may then output the one or more operation parameters 206 (for example, as a control signal or signals) to cause the one or more elements 340 to automatically operate in the recovery mode.

Advantageously, if a vehicle 100 is stuck (for example, in mud or sand), then the recovery control system 300 of the vehicle 100 can control one or more elements 340 of the vehicle, for example the wheels and/or suspension, according to predetermined operation parameters 206 to recover the vehicle 100 so it is no longer stuck. The operation parameters are obtained according to the environment in which the vehicle is stuck. For example, on dry sand, controlling the wheels to oscillate left and right may be beneficial to recover the vehicle from being stuck in the sand, by causing loose sand grains to fall into the space occupied by the moving wheels as they oscillate to eventually lift the vehicle 100 up out of the sand. It may be beneficial to operate the wheels and suspension in a different way to recover the vehicle 100 from mud (for example, rotating the wheels slowly forwards and backwards while lifting and lowering the suspension may assist to "bounce" the vehicle out of the soft mud). The present invention provides for a predetermined strategy to be implemented to recover the vehicle 100 without the driver needing experience in recovering the vehicle from the environment in which it is stuck.

The recovery control system 300 in some examples may further comprise a predetermined parameter storage means 310 as shown in Figure 3. The predetermined parameter storage means 310 comprises the one or more operation parameters 206. The predetermined parameter storage means 310 may comprise, for example, a memory storage device such as a hard disk drive, server, or cloud storage, where the predetermined parameter are stored for retrieval). In examples where the predetermined parameter storage means 310 is located in the vehicle and/or part of the recovery control system 300 (e.g. a hard drive in the vehicle), no wireless connectivity may be needed for the recovery control system 300 to communicate with the predetermined parameter storage means 310. This may be advantageous in remote locations without cellular or other wireless connectivity. In other examples, the predetermined parameter storage means 310 may not be part of the recovery control system 300 but may be located at a remote server or in the cloud and the recovery control system 300 may be configured to communicate with the remote predetermined parameter storage means 310. In examples where the predetermined parameter storage means 310 is remote from the recovery control system 300 and/or vehicle, this may advantageously reduce complexity of the on-board vehicle systems and may facilitate central updating of the operation parameters 206 stored in the predetermined parameter storage means 310 e.g. for access by a fleet of vehicles.

Figure 4 illustrates a recovery control system 300 for controlling one or more elements 340 of a vehicle 100. The recovery control system 300 comprises one or more controllers 110. The recovery control system 300 is configured to receive a recovery request signal 202 indicative of a request to recover the vehicle 100 from a stuck state. The recovery request signal 202 may be received from a user input device 320 and/or one or more sensors 330. The recovery control system 300 is configured to receive one or more inputs 204 indicative of one or more environment factors at the location of the vehicle. The one or more inputs 204 may be received from a user input device 320 and/or one or more environment sensors 330.

The recovery control system 300 is configured to determine one or more operation parameters 206 to control the one or more elements 340 to operate in a recovery mode to cause recovery of the vehicle 100 from the stuck state, in dependence on the recovery request signal 202 and the one or more inputs 204. The recovery control system 300 may then output the one or more operation parameters (for example, as a control signal 206) to cause the one or more elements 340 to automatically operate in the recovery mode.

The recovery control system 300 as illustrated in Figure 4 comprises one controller 110, although it will be appreciated that this is merely illustrative. The controller 110 comprises processing means 120 and memory means 130. The processing means 120 may be one or more electronic processing device which operably executes computer-readable instructions. The memory means 130 may be one or more memory device. The memory means 130 is electrically coupled to the processing means 120. The memory means 130 is configured to store instructions, and the processing means 120 is configured to access the memory means 130 and execute the instructions stored thereon.

The controller 110 comprises an input means 140 and an output means 150. The input means 140 may comprise an electrical input 140 of the controller 110. The output means 150 may comprise an electrical output 150 of the controller 110. The input means 140 is arranged to receive a recovery request signal 202. The recovery request signal 202 is an electrical signal which is indicative of a request to recover the vehicle 100 from a stuck state. The input means 140 is arranged to receive one or more inputs 204. The one or more inputs 204 are electrical signals which are indicative of one or more environment factors at the location of the vehicle 100. The output 150 is arranged to output one or more operation parameters (for example, as a control signal or signals 155) to cause the one or more elements 340 to automatically operate in the recovery mode. In particular, the memory means 130 may comprise computer-readable instructions which, when executed by the processor 120, perform the method 200 according to an embodiment of the invention.

The one or more processors 120 of the recovery control system 300 may be collectively configured to determine the one or more operation parameters 206 using the predetermined parameter storage means 310, e.g. by looking up the stored operation parameter(s) 206 for one or more elements 340 to try and achieve recovery of the vehicle 100. The predetermined parameter storage means 310 may comprise one or more inputs 330 mapped to the one or more operation parameters 206 in a mapping relationship (e.g. in a look-up table or similar), and the one or more processors 120 may be collectively configured to determine the one or more operation parameters 206 using the mapping relationship. In this way, the operation parameters 206 to be used to control the vehicle 100 are prestored and may be retrieved depending on the environment in which the vehicle is stuck, as indicated by the one or more inputs 330. In this way the vehicle 100 may benefit from being controlled according to prestored "expert" control parameters for the current situation, to try and retrieve the vehicle 100 from the stuck state.

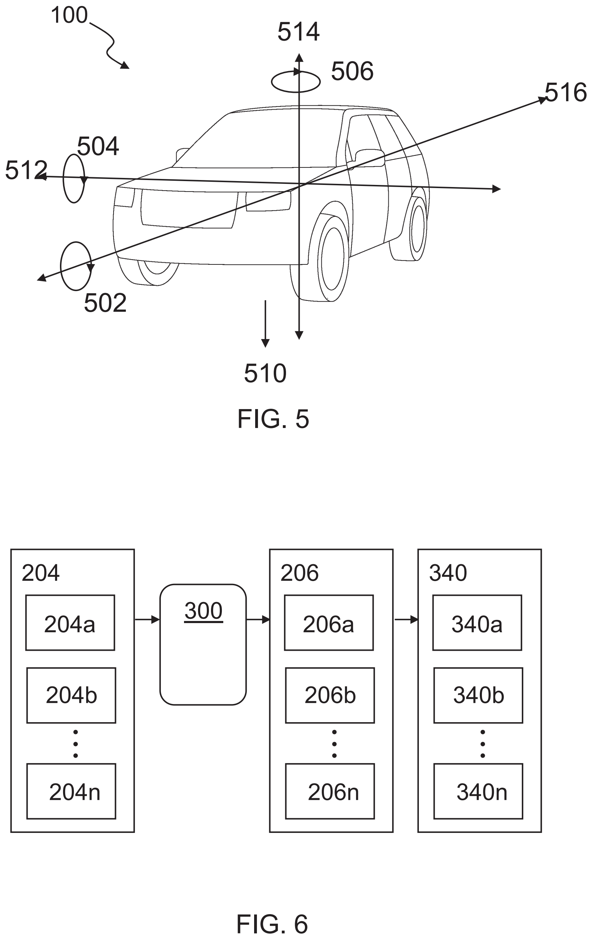

Figure 5 shows an example definition of directions and angular rotation planes in accordance with an embodiment of the invention. In this example, the vehicle 100 illustrated is defined to have a forward - reverse oriented axis directed along an x-axis 516 (longitudinally located from front to back of the vehicle), a left - right oriented axis directed along a y-axis 512 which is perpendicular to the forward - reverse axis, and an up - down oriented axis directed along a z-axis 514 (which is perpendicular to the forward - reverse axis and the left-right axis, through the base and roof of the vehicle). The z-axis may be defined as being perpendicular to a local plane of the ground level on which the vehicle 100 is located (in circumstances where the ground level is not flat/planar, an average plane position in the location of the vehicle 100 may be determined). A roll angle 502 about the axis 516 tilting the vehicle left and right may be defined in a plane defined by rotating in the y-z plane, a pitch angle 504 about the 512 tilting the vehicle forward and backward may be defined in a plane defined by rotating in the x-z plane, and a yaw angle 506 about the axis 514 pointing the vehicle left and right may be defined in a plane defined by rotating in the x-y plane. In other examples, the coordinate system 512, 514, 516 may be defined with respect to a different reference, for example, the z-axis 514 may be defined as being parallel with a gravity vector (g) directed towards the centre of the Earth.

The one or more operation parameters 206 may be configured to control the one or more elements 340 to modify one or more of: a position of the vehicle in a direction substantially aligned with a longitudinal axis of the vehicle (i.e. modify a longitudinal position of the vehicle 100 to move the vehicle along a direction of orientation of the front of the vehicle 516); a lateral position of the vehicle 100 to move the vehicle perpendicular to a direction of orientation of the front of the vehicle 512 (i.e. shift the position left or right); and a vertical position 514 of the vehicle 100 relative to a level of the ground on which the vehicle 100 is located (i.e. move the vehicle up and down on the ground level). Advantageously, the vehicle movement may be controlled in different directions (e.g. in the x, y, and/or z directions 512, 514, 516) to recover the vehicle 100 from the stuck state.

The recovery control system 300 may be configured to: determine the one or more operation parameters 206 in dependence on one or more of: the pitch 504 of the vehicle 100, the roll 502 of the vehicle 100, and the yaw 506 of the vehicle 100, to control the one or more elements 340 to operate in the recovery mode to cause recovery of the vehicle 100 from the stuck state. The one or more elements 340 may be controlled to cause the vehicle 100 to be controlled in a recommended recovery direction. The recovery control system 300 may then output the one or more operation parameters 206 to the one or more elements 340 to cause the one or more elements 340 to automatically operate in the recovery mode to recover the vehicle 100 in the recommended recovery direction. That is, the orientation of the vehicle 100 can be provided to the recovery control system 300 which can take account of that orientation in determining how to control the operation of the one or more elements to recover the vehicle 100. For example, if the vehicle 100 is facing uphill (that is the pitch angle 504 is indicative of the vehicle pointing uphill), the recovery process may account for the effect of gravity acting to pull the vehicle down the hill and control the one or more elements 340 accordingly.

The recovery control system 300 may be configured to output the one or more operation parameters 206 to control the one or more elements 340 in dependence on a determination that the vehicle 100 meets one or more recovery conditions. The one or more recovery conditions may comprise, for example, a slope angle of the vehicle being within a recoverable slope angle range; a determination that the vehicle is not towing a trailer; the vehicle having brakes released; and/or a determination that the vehicle is not grounded out. Thus, in some examples, a further check can be performed prior to outputting the operation parameters 206 to cause recovery of the vehicle to help ensure the vehicle is in an appropriate situation for auto recovery.

As an example, if the vehicle 100 was towing a trailer, it may not be appropriate to cause the vehicle to change direction left and right to cause it to be freed from the stuck state due to the trailer being attached. The recovery control system 300 in this example may output an indication to release the trailer from the vehicle 100, and/or may output alternative operation parameters 206 which do not cause left-right directional motion of the vehicle, to attempt to free the stuck vehicle. As another example, if the vehicle 100 is determined to be grounded on an obstacle underneath the vehicle 100 (e.g. as detected by a camera of the vehicle) then the recovery control system 300 may not cause automatic control of the vehicle 100. It may instead output an indication to a user that recovery is not currently possible due to the obstacle. Other examples may be envisaged of such pre-checks prior to auto recovery as discussed herein.

Figure 6 shows a recovery control system 300 and an example of plural inputs 204a-204n, plural operational parameters 206a-206n and plural elements 340a-340n of the vehicle 100 in accordance with an embodiment of the invention. It will be appreciated that not all of the inputs, operational parameters, and elements need be plural and one operational parameter of one element may also be determined by one input (for example, only the suspension height as an element may be controlled).

The one or more operation parameters 206a-206n may comprise: a wheel rotation speed to cause wheels of the vehicle 100 to rotate at the wheel rotation speed; a wheel rotation acceleration to cause wheels of the vehicle to rotate at the wheel rotation acceleration; a wheel rotation direction to cause wheels of the vehicle to rotate in the wheel rotation direction; a wheel steering direction to cause wheels of the vehicle to be oriented in the wheel steering direction; and/or a rate of change of wheel steering direction to cause wheels of the vehicle to change orientation at the rate of change of wheel steering direction. That is, the directional and/or rotational movement of the wheels can be controlled to release the vehicle from the stuck state according to the environment in which the vehicle is stuck.

The one or more operation parameters 206a-206n may comprise a suspension system height to cause a suspension system of the vehicle 100 to operate at the suspension system height and/or a suspension system height variation to cause a suspension system of the vehicle to vary in a particular way (e.g. within a particular range of heights, vary at a particular speed). Advantageously, the elements 340a-340n (e.g. wheels and/or variable height suspension) of the vehicle 100 can be controlled in the recovery mode according to the environment in which the vehicle is stuck, to appropriately allow for recovery of the vehicle from the stuck state. The elements may be operated in different ways depending on the particular environment in which the vehicle 100 is stuck.

The one or more elements 340a-340n may comprise one or more of: a wheel rotation control mechanism configured to control a wheel rotation direction; a wheel steering direction control mechanism configured to control a wheel steering direction; and a suspension height control mechanism configured to control a suspension height of a suspension system of the vehicle. Advantageously, elements 340a-340n of the vehicle which control its movement may be controlled in different ways to recover the vehicle from the stuck state depending on the particular environment and situation in which the vehicle is stuck.

The operation parameters 206a-206n, when output to a wheel rotation control mechanism of the vehicle 100, may cause one or more wheels controlled by the wheel rotation control mechanism to repeatedly vary wheel rotation direction between a forward direction and a reverse direction. The operation parameters 206a-206n, when output to a wheel steering direction control mechanism of the vehicle 100, may cause one or more wheels controlled by the wheel steering direction control mechanism to repeatedly vary wheel steering direction between a first turning direction and a second turning direction. The operation parameters 206a-206n, when output to a suspension height control mechanism of the vehicle 100, may cause the suspension height control mechanism to repeatedly vary suspension height between a first suspension height and a second suspension height. Other examples of control of vehicle elements 340a-340n may be envisaged. Advantageously, elements 340a-340n of the vehicle 100 which control its movement may be controlled in different ways to recover the vehicle from the stuck state. Advantageously, the vehicle 100 may be recovered from the stuck state by rotating the wheels back and forth, oscillating the direction in which the wheels are facing, and/or moving the variable suspension up and down to bounce the vehicle, in a predetermined way which is a recommended way to recover the vehicle from the particular environment in which it is stuck. This may be particularly advantageous when the vehicle is stuck in dry sand, for example.

The one or more inputs 204a-204n may indicate one or more of: a confirmation that the area in which the vehicle 100 is located is suitable to be recovered from (e.g. the vehicle is not sinking, is not seriously damaged, or in an otherwise hazardous environment); a confirmation of a terrain type in which the vehicle 100 is stuck (such as wet sand, dry sand, mud, ice, snow, etc.), and a confirmation that a determined vehicle recovery direction is suitable for the vehicle to move into (e.g. there is space for the vehicle to move into). The recovery process may be paused or may not begin if the environment is not one suitable to be recovered from using the recovery control system. A check may thus be made that the direction of recovery of the vehicle 100 is appropriate. The recovery process may be performed in accordance with an indication of the terrain so that a suitable recovery process can be performed for that terrain (e.g. wheel movement to recover a vehicle from sand may be different to that for recovery from snow).

The recovery control system 300 may be configured to output the recommended recovery direction to a user, for example, via a visual, audio or haptic indicator. The recovery control system 300 may receive a user confirmation input in response to the output recommended recovery direction confirming the recovery control system is to recover the vehicle in the recommended recovery direction, before outputting the one or more operation parameters to the one or more elements. In this way, the user is informed of the planned recovery process and can provide their confirmation to go ahead with recovery. Embodiments disclosed herein may provide the advantage of expert control of the vehicle for recovery from the stuck state without the user being such an expert. Providing feedback to the user of the automatic recovery process, and asking for user confirmation, can help instil confidence in the user that the vehicle is behaving as it should in attempting to recover the vehicle.

The recovery control system 300 may be configured to receive drive request signal indicative of a user-indicated desired driving movement of the vehicle 100, and determine the recommended recovery direction in dependence on the user-indicated desired driving movement of the vehicle 100. The recovery control system 300 may be configured to determine the one or more operation parameters 206a-206n of the one or more elements 340a-340n further in dependence on the drive request signal. For example, if the user would like to be recovered and have the vehicle 100 move in the forward direction, this can be indicated by the user and the recovery process performed to move the vehicle in the forward direction during recovery. Advantageously, the user may provide input to indicate a direction in which the vehicle 100 should be moved during recovery so the user has some control over the recovery process. Consequently, the user need not be concerned with how the elements are controlled during recovery.

The recovery control system 300 may be configured to determine the one or more operation parameters 206a-206n of the one or more elements 340a-340n by retrieving the one or more operation parameters 206a-206n from the predetermined parameter storage means 310 in dependence on the drive request signalling. Advantageously, the pre-stored operation parameters can be retrieved according to how the user indicates they wish the vehicle to be operated.

Figure 7 shows an example of a recovery control system 300 exiting a recovery mode in accordance with an embodiment of the invention. In some examples, the recovery control system 300 may be configured to receive recovery signal 702 indicative of recovery of the vehicle from the stuck state. For example, one or more sensors of the vehicle may determine that the environment has changed, indicative of the vehicle environment/ surface changing where it is located (e.g. the surface on which the vehicle 100 is located may be determined to change from mud to tarmac) and/or that the vehicle position on/in the ground has changed (e.g. from an underside of the vehicle being less than a predetermined distance from the surface of the ground, to moving to be more than a predetermined distance from the surface of the ground), indicative of the vehicle being recovered from being stuck in the ground. As another example, the vehicle may be determined to have a body-over-ground speed consistent with a wheel rotation speed for a vehicle which is not stuck. In response to receipt of the recovery signal 702, the recovery control system 300 may transmit a recovery mode cancellation signal 704 to stop the one or more elements 340 operating in the recovery mode. Thus, the recovery control system 300 may be able to determine the vehicle 100 has been recovered from the stuck state, and cancel operation of the vehicle in the recovery mode, allowing the vehicle to be controlled as usual. The recovery mode cancellation signal 702 may cause the one or more elements 340 to revert to operating in the same way as immediately before operation of the one or more elements in the recovery mode. Advantageously, following recovery, the vehicle may be operated as it was prior to getting stuck.

Figures 8A and 8B show an example input device 800 and example output device 820 in accordance with embodiments of the invention. In some examples, the input device 800 and the output device 820 may be the same user interface device (for example, a touch screen display). Figure 8A shows an input device 800 comprising at least one button object 802 (which may be a physical button or key, or may be a virtual button such as a soft key or button object displayed on a touch screen or touch panel). In other examples the input device may comprise a microphone to receive user audio input (e.g. a spoken command to "start recovery"). Figure 8B shows an output device 820 configured to output information 804 for a user (a display is illustrated displaying a message 804 but in other examples the output device 820 may comprise a speaker to provide audio output).

The recovery control system 300 may be configured to, in response to receipt of the recovery request signal 202, prompt the user to input, via a user input device 800 (e.g. via one or more user input elements 802), the one or more inputs indicative of the one or more environment factors at the location of the vehicle 100. For example, the user may be able to provide an input to request recovery of the vehicle and start the automatic recovery process, and/or the user may be able to provide, as input, an indication of the environment in which the vehicle is stuck, and/or the user may be able to provide one or more recovery constraints such as "move the vehicle forwards during recovery".

The recovery control system 300 may be configured to output an indication 804 of the operation of the one or more elements 340 for a user of the vehicle 100. The indication 804 of the operation of the one or more elements 340 (e.g. a written message to indicate what is happening or a status progressing bar) may be provided during the recovery of the vehicle 100 from the stuck state, to give feedback to the user to indicate how the recovery process is progressing and keep the user informed. The recovery control system 300 may be able to cause the output of queries, or prompts, to the user of the vehicle 100, and obtain an indication of the environment from the user's response, and/or obtain an indication of how the user would like the vehicle to be moved (e.g. move forward, move backward, bear left) based on the user's response. This may help the user feel in control and have confidence in the operation of the vehicle, and assists in the provision of input data to be used to retrieve appropriate operation parameters to control the recovery process. User input may supplement sensor input in some examples.

The recovery control system 300 may be configured in some examples to receive feedback data from one or more sensors (and/or from user inputs in response to prompts output to the user) during operation of the one or more elements 340a-340n in the recovery mode. The recovery control system 300 may then determine a recovery state of the vehicle 100 based on the feedback data, determine one or more updated operation parameters 206a-206n in dependence on the recovery state, and output the one or more updated operation parameters 206a-206n to the one or more elements 340a-340n to cause the one or more elements to operate in an updated recovery mode. The feedback signal may be indicative of one or more of: a change in body-over-ground speed, a change in wheel torque, a change of GPS location, a change in body height from ground, a change in wheel rotation speed, a change in a ratio of wheel rotation speed to body over ground speed. Thus as the vehicle progresses in the recovery process according to the operation parameters, feedback signal can be provided to the recovery control system 300 and the operation parameters 206a-206n can be updated according to how recovery is progressing. For example, as the vehicle is moved from deep sand to shallow sand, the movement of the wheels being performed to release the vehicle from the sand may be adjusted to provide for appropriate recovery of the vehicle from the sand.

This disclosure also covers a system comprising any recovery control system 300 as disclosed herein, and the one or more elements 340 of the vehicle. (e.g. a wheel rotation subsystem; a wheel direction subsystem; and/or a suspension height subsystem).

In an example scenario, a vehicle 100 may become stuck in dry sand and the user may request automatic assistance to be released from this stuck state. The recovery control system 300 may carry out an initial vehicle health check, for example to ensure that one or more vehicle systems are functioning. The recovery control system 300 may then retrieve information using sensors on the vehicle 100 about the environment, such as the ground conditions, and the weather. The recovery control system 300 may output additional queries for response by the user, for example to obtain further data concerning the surface on which the vehicle 100 is located, the nature of the ground conditions, and/or other factors. The recovery control system 300 may request confirmation from the user that control of one or more elements 340 of the vehicle 100 can be performed such as the variable height suspension of the vehicle 100 being raised to aid recovery, for example. The user may confirm that suspension height adjustment can take place, or may deny suspension height adjustment, for example if there is an object over the vehicle 100 with which it might collide if raised. The recovery control system 300 may receive, as input data, information about the pitch, roll, and yaw of the vehicle 100, and may recommend a direction for recovery based on that input data. In some examples, the recovery control system 300 may determine to recover the vehicle 100 in a direction which exploits the existing slope, thereby making use of gravity to extract the vehicle 100 from the stuck state. Once recovery of the vehicle 100 starts, the recovery control system 300 may control the elements 340 to attempt to extract the vehicle 100 from the stuck state. In some examples, the recovery control system 300 may provide output feedback to the user to inform the user of what is happening and why, to help the user feel confident in the actions of the vehicle 100. In some examples, the user may be able to request manual control at any point during recovery, for example by providing an input to the recovery control system 300 to cease automatic recovery.

It will be appreciated that various changes and modifications can be made to the present invention without departing from the scope of the present application.

## Claims

1. A recovery control system for controlling one or more elements of a vehicle, the recovery control system comprising one or more processors collectively configured to:
receive a recovery request signal indicative of a request to recover the vehicle from a stuck state, wherein, in the stuck state, the vehicle has an actual body-over-ground speed lower than an expected body-over ground-speed;
receive one or more inputs indicative of one or more environment factors at the location of the vehicle;
in dependence on the recovery request signal and the one or more inputs, determine one or more operation parameters to control the one or more elements to operate in a recovery mode to cause recovery of the vehicle from the stuck state; and
output the one or more operation parameters to the one or more elements to cause the one or more elements to automatically operate in the recovery mode.

2. The recovery control system of claim 1, further comprising a predetermined parameter storage means comprising the one or more operation parameters, wherein the one or more processors are collectively configured to determine the one or more operation parameters using the predetermined parameter storage means.

3. The recovery control system of any preceding claim, wherein the one or more operation parameters are configured to control the one or more elements to modify one or more of:
a position of the vehicle in a direction substantially aligned with a longitudinal axis of the vehicle;
a lateral position of the vehicle to move the vehicle perpendicular to a direction of orientation of the front of the vehicle; and
a vertical position of the vehicle relative to a level of the ground on which the vehicle is located.

4. The recovery control system of any preceding claim, wherein the one or more operation parameters comprise one or more of:
a wheel rotation speed to cause wheels of the vehicle to rotate at the wheel rotation speed;
a wheel rotation acceleration to cause wheels of the vehicle to rotate at the wheel rotation acceleration;
a wheel rotation direction to cause wheels of the vehicle to rotate in the wheel rotation direction;
a suspension system height to cause a suspension system of the vehicle to operate at the suspension system height;
a wheel steering direction to cause wheels of the vehicle to be oriented in the wheel steering direction; and
a rate of change of wheel steering direction to cause wheels of the vehicle to change orientation at the rate of change of wheel steering direction.

5. The recovery control system of any preceding claim, wherein the one or more elements comprise one or more of:
a wheel rotation control mechanism configured to control a wheel rotation direction;
a wheel steering direction control mechanism configured to control a wheel steering direction; and
a suspension height control mechanism configured to control a suspension height of a suspension system of the vehicle.

6. The recovery control system of any preceding claim, wherein one or more of:
the operation parameters, when output to a wheel rotation control mechanism of the vehicle, cause one or more wheels controlled by the wheel rotation control mechanism to repeatedly vary wheel rotation direction between a forward direction and a reverse direction;
the operation parameters, when output to a wheel steering direction control mechanism of the vehicle, cause one or more wheels controlled by the wheel steering direction control mechanism to repeatedly vary wheel steering direction between a first turning direction and a second turning direction; and
the operation parameters, when output to a suspension height control mechanism of the vehicle, cause the suspension height control mechanism to repeatedly vary suspension height between a first suspension height and a second suspension height.

7. The recovery control system (300) of any preceding claim, wherein the recovery request signal (202) is received in response to receipt of a recovery request user input made by a user; and/or based on data received from one or more sensors, the data indicative of the vehicle being in the stuck state.

8. The recovery control system of any preceding claim, wherein the one or more inputs are received:
in response to an environment user input made by a user and indicative of the environment factors; and/or
from one or more sensors configured to collect data indicative of the environment factors.

9. The recovery control system of any preceding claim, configured to:
determine the one or more operation parameters in dependence on one or more of: the pitch of the vehicle, the roll of the vehicle, and the yaw of the vehicle, to control the one or more elements to operate in the recovery mode to cause recovery of the vehicle from the stuck state in a recommended recovery direction; and
output the one or more operation parameters to the one or more elements to cause the one or more elements to automatically operate in the recovery mode to recover the vehicle in the recommended recovery direction.

10. The recovery control system of any preceding claim, wherein the recovery control system is configured to, in response to receipt of the recovery request signal, prompt the user to input, via a user input device the one or more inputs indicative of the one or more environment factors at the location of the vehicle.

11. The recovery control system of any preceding claim, wherein the recovery control system is configured to:
receive feedback data from one or more sensors during operation of the one or more elements in the recovery mode;
determine a recovery state of the vehicle based on the feedback data;
determine one or more updated operation parameters in dependence on the recovery state; and
output the one or more updated operation parameters to the one or more elements to cause the one or more elements to operate in an updated recovery mode.

12. The recovery control system of any preceding claim, wherein the recovery control system is configured to:
output the one or more operation parameters to control the one or more elements in dependence on a determination that the vehicle meets one or more recovery conditions, the one or more recovery conditions comprising:
a slope angle of the vehicle being within a recoverable slope angle range;
a determination that the vehicle is not towing a trailer;
the vehicle having brakes released; and
a determination that the vehicle is not grounded out.

13. The recovery control system of any preceding claim, wherein the recovery control system is configured to:
receive recovery signal indicative of recovery of the vehicle from the stuck state; and
in response to receipt of the recovery signal, transmit a recovery mode cancellation signal to stop the one or more elements operating in the recovery mode.

14. A vehicle comprising the recovery control system of any of claims 1 to 13.

15. A method for controlling one or more elements of a vehicle, the method comprising:
receiving a recovery request signal indicative of a request to recover the vehicle from a stuck state, wherein, in the stuck state, the vehicle has an actual body-over-ground speed lower than an expected body-over ground-speed;
receiving one or more inputs indicative of one or more environment factors at the location of the vehicle;
in dependence on the recovery request signal and the one or more inputs, determining one or more operation parameters of the one or more elements, the one or more operation parameters configured to control one or more elements to operate in a recovery mode to cause recovery of the vehicle from the stuck state; and
outputting the one or more operation parameters to the one or more elements to cause the one or more elements to operate in the recovery mode.
